# EUROPEAN PATENT APPLICATION

(11) **EP 4 717 397 A1**
(43) Date of publication of application: **01.04.2026**
(21) Application number: 25193016.0
(22) Date of filing: 31.07.2025
(51) Int. Cl.: B23K 26/03, B23K 26/244, B23K 26/26

(54) **LASER PROCESSING APPARATUS, DEFECT MODE DETERMINATION SYSTEM, AND DEFECT MODE DETERMINATION METHOD**

(30) Priority: 27.09.2024 JP 2024169533
(71) Applicant: Panasonic Intellectual Property Management Co., Ltd., Kadoma-shi, Osaka 571-0057 (JP)
(72) Inventor: MURAKAMI, Naruse, Osaka, 571-0057 (JP); KOBAYASHI, Yuji, Osaka, 571-0057 (JP)
(74) Representative: Novagraaf International SA

(57) **Abstract**

A laser processing apparatus (1) that performs laser processing on a workpiece (2) by irradiating the workpiece (2) with processing laser light (PL) includes: a first laser light source (21) that emits the processing laser light (PL); and a determiner (53) that determines a defect mode of the laser processing from a three-dimensional information image generated based on reflected light that is measurement light (ML) reflected by the workpiece (2). The three-dimensional information image is an image showing a distribution of the depth of a keyhole (2b) formed in the workpiece (2) when irradiated with the processing laser light (PL), the intensity of the reflected light of the measurement light (ML), and the frequency of occurrence of the depth of the keyhole (2b) with respect to the intensity of the reflected light of the measurement light (ML).

## Description

### Field

The present disclosure relates to laser processing apparatuses, defect mode determination systems, and defect mode determination methods.

### Background

A known laser processing apparatus irradiates a workpiece with laser beams to perform laser processing on the workpiece. This type of laser processing apparatuses include a known laser welder that irradiates a workpiece made of a metal material or the like with laser beams to laser weld the workpiece (for example, Patent Literature (PTL) 1).

The laser welder disclosed in PTL 1 measures, by the optical coherence tomography (OCT) technology, the depth of a keyhole formed in a processed surface of a workpiece during laser processing.

### Citation List

### Patent Literature

PTL 1: Japanese Unexamined Patent Application Publication (Translation of PCT Application) No. 2018-501964

### Summary

### Technical Problem

However, with a conventional laser processing apparatus, it is not possible to identify the type of a laser processing defect, leading to a failure to determine a defect mode.

The present disclosure has been conceived to solve this problem and has an object to provide a laser processing apparatus, a defect mode determination system, and a defect mode determination method with which a defect mode in laser processing can be determined.

### Solution to Problem

In order to achieve the aforementioned object, a laser processing apparatus according to one aspect of the present disclosure is a laser processing apparatus that performs laser processing on a workpiece by irradiating the workpiece with processing laser light, and includes: a laser light source that emits the processing laser light; and a determiner that determines a defect mode of the laser processing from a three-dimensional information image generated based on reflected light that is measurement light reflected by the workpiece. The three-dimensional information image is an image showing a distribution of a depth of a keyhole formed in the workpiece when irradiated with the processing laser light, an intensity of the reflected light, and a frequency of occurrence of the depth of the keyhole with respect to the intensity of the reflected light.

A defect mode determination system according to one aspect of the present disclosure is a defect mode determination system that determines, when performing laser processing on a workpiece by irradiating the workpiece with processing laser light, a defect mode of the laser processing, and includes: a determiner that determines the defect mode of the laser processing from a three-dimensional information image generated based on reflected light that is measurement light reflected by the workpiece. The three-dimensional information image is an image showing a distribution of a depth of a keyhole formed in the workpiece when irradiated with the processing laser light, an intensity of the reflected light, and a frequency of occurrence of the depth of the keyhole with respect to the intensity of the reflected light.

A defect mode determination method according to one aspect of the present disclosure is a defect mode determination method for determining, when performing laser processing on a workpiece by irradiating the workpiece with processing laser light, a defect mode of the laser processing, and includes: determining the defect mode of the laser processing from a three-dimensional information image generated based on reflected light that is measurement light reflected by the workpiece. The three-dimensional information image is an image showing a distribution of a depth of a keyhole formed in the workpiece when irradiated with the processing laser light, an intensity of the reflected light, and a frequency of occurrence of the depth of the keyhole with respect to the intensity of the reflected light.

### Advantageous Effects

According to the present disclosure, a defect mode in laser processing can be determined.

### Brief Description of Drawings

**[****FIG. 1****]**

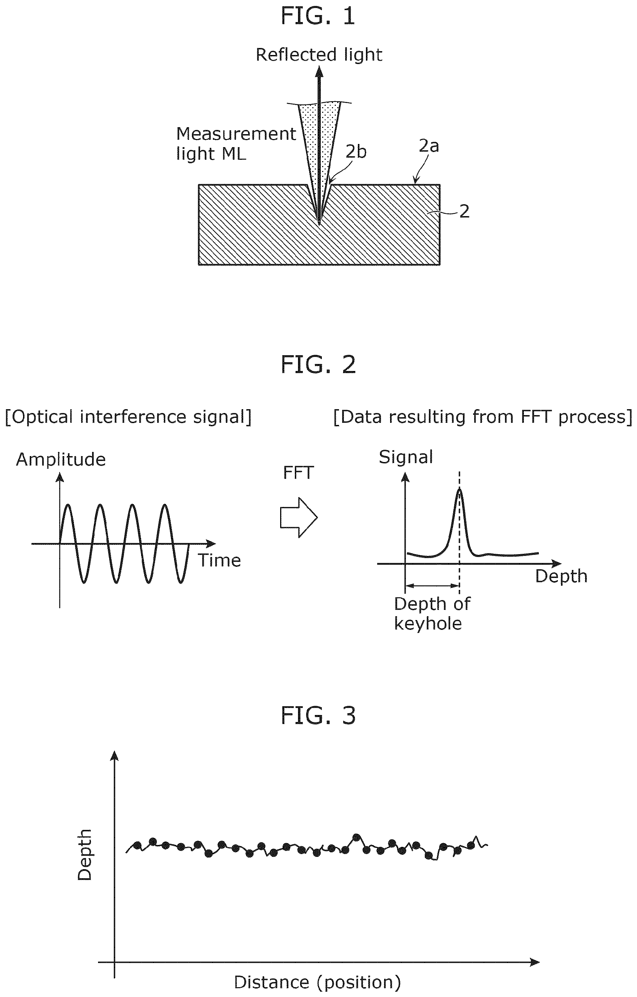

   FIG. 1 is a diagram illustrating a situation where the depth of a keyhole formed in a workpiece is measured.
**[****FIG. 2****]**
   FIG. 2 is a diagram illustrating an optical interference signal obtained according to an optical path difference between reference light and reflected light that is measurement light reflected by a keyhole, and data obtained by performing a fast Fourier transform on the optical interference signalE
**[****FIG. 3****]**
   FIG. 3 is a schematic view illustrating data of the depth of a keyhole with respect to the distance on a processed surface.
**[****FIG. 4****]**

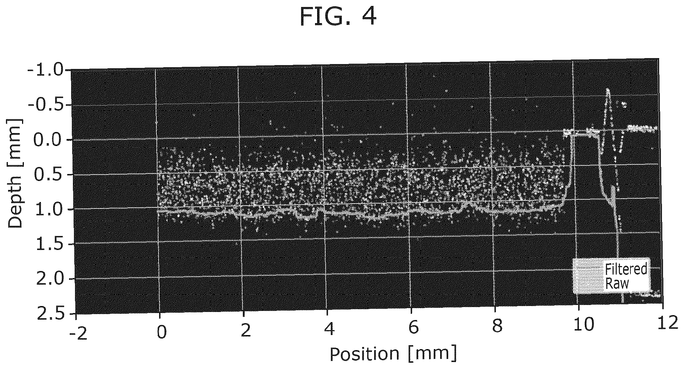

   FIG. 4 is a diagram illustrating an example of the depth profile of a keyhole with respect to the distance on a processed surface.
**[****FIG. 5****]**

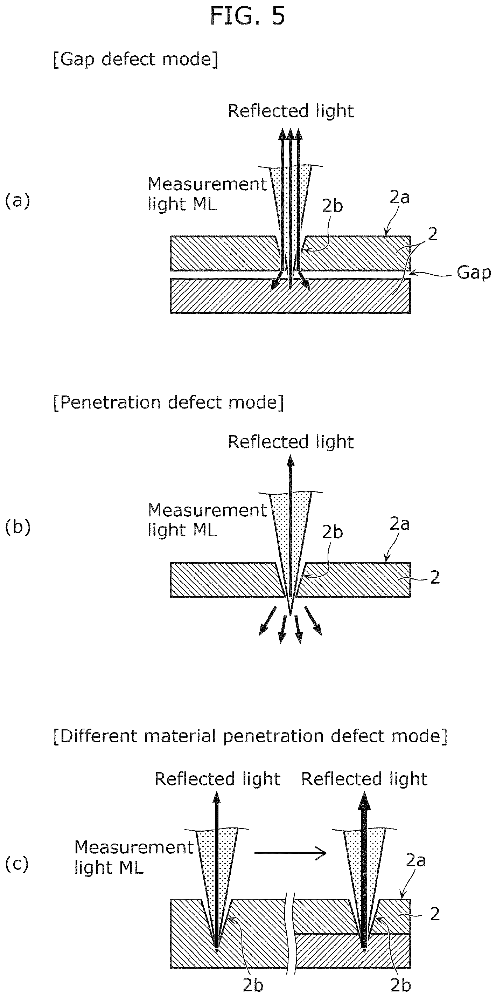

   FIG. 5 is a diagram for describing states at the time of occurrence of defects in a gap defect mode, a penetration defect mode, and a different material penetration defect mode.
**[****FIG. 6****]**

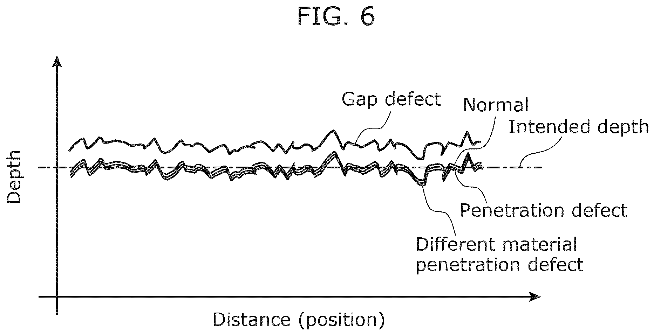

   FIG. 6 is a schematic view illustrating data of the depth of a keyhole with respect to the distance on a processed surface when a defect occurs.
**[****FIG. 7****]**

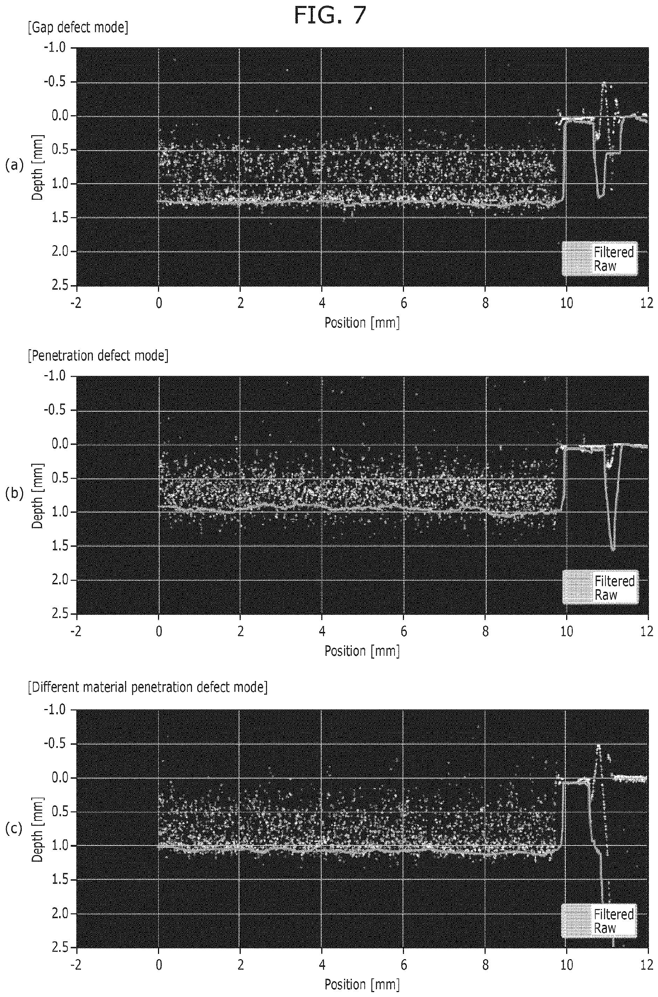

   FIG. 7 is a diagram illustrating an example of the depth profile of a keyhole with respect to the distance on a processed surface when a defect occurs.
**[****FIG. 8****]**

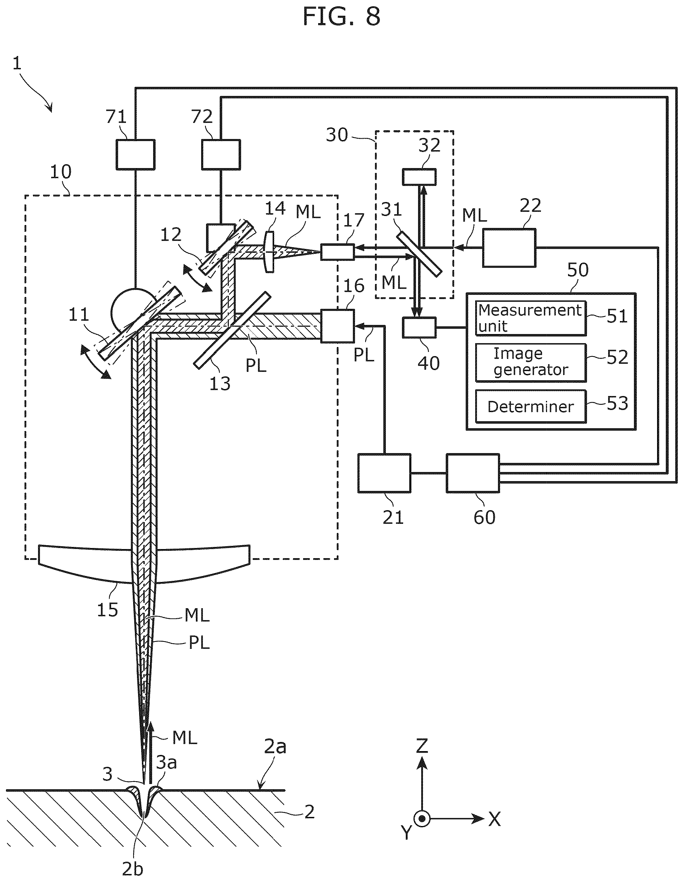

   FIG. 8 is a diagram illustrating the configuration of a laser processing apparatus according to an embodiment.
**[****FIG. 9****]**

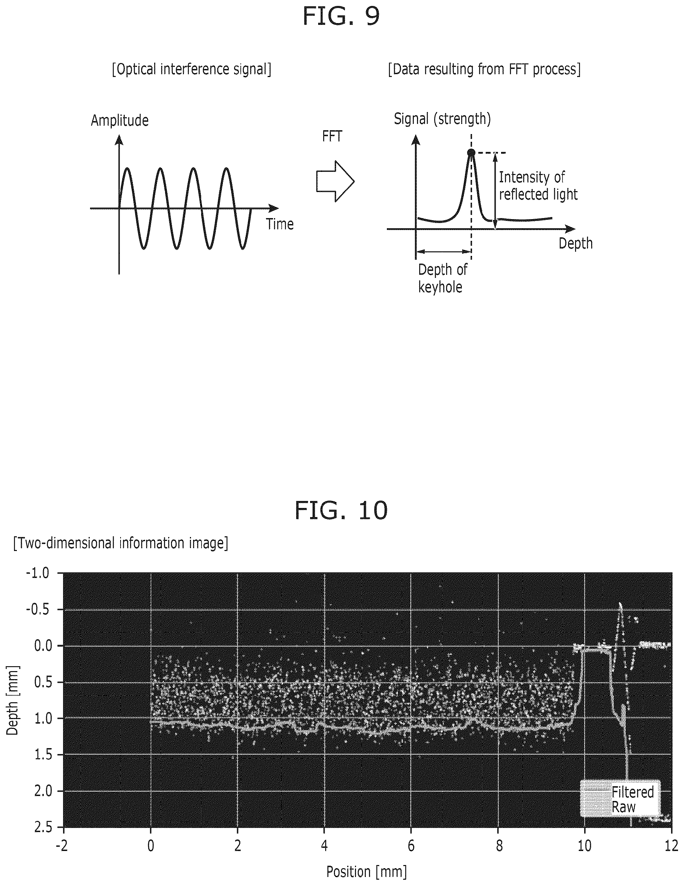

   FIG. 9 is a diagram illustrating an optical interference signal obtained according to an optical path difference between reference light and reflected light that is measurement light reflected by a keyhole, and data obtained by performing a fast Fourier transform on the optical interference signal, in a laser processing apparatus according to an embodiment.
**[****FIG. 10****]**
   FIG. 10 is a diagram illustrating an example of the depth profile (two-dimensional information image) of a keyhole with respect to the distance on a processed surface in a laser processing apparatus according to an embodiment.
**[****FIG. 11****]**

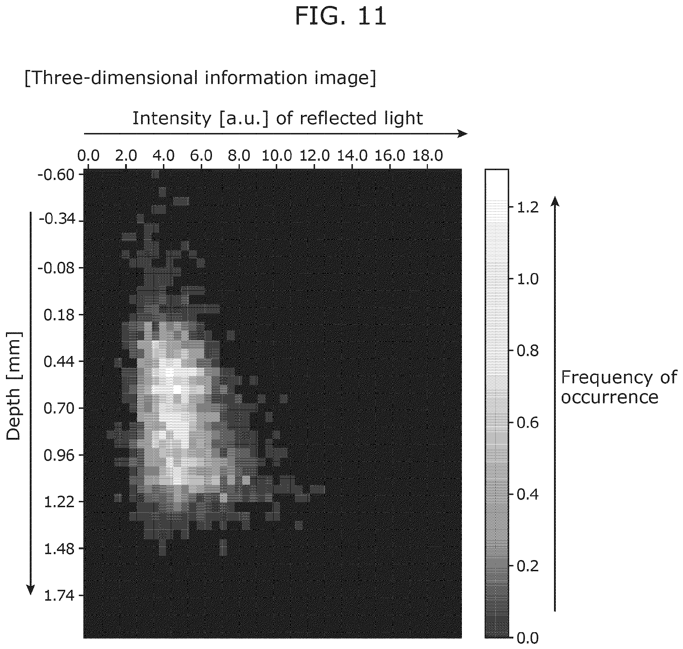

   FIG. 11 is a diagram illustrating an example of a three-dimensional information image generated by an image generator in a laser processing apparatus according to an embodimentP
**[****FIG. 12****]**

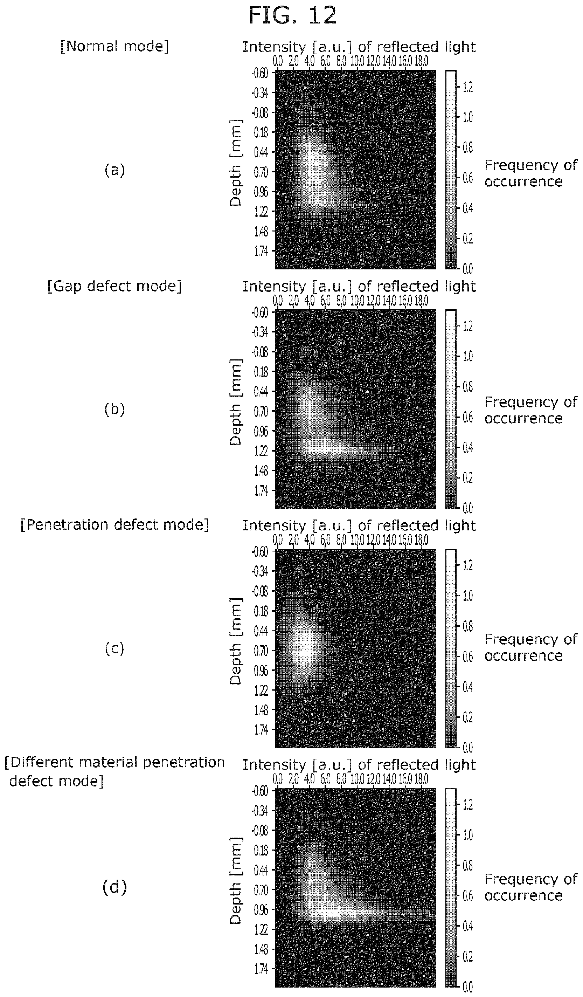

   FIG. 12 is a diagram illustrating an example of three-dimensional information images generated in a normal mode, a gap defect mode, a penetration defect mode, and a different material penetration defect mode.
**[****FIG. 13****]**

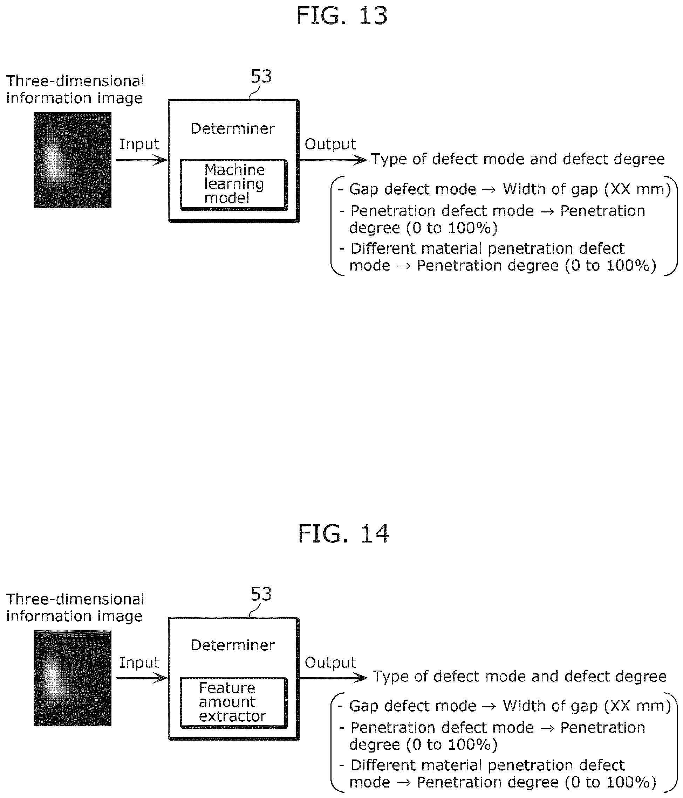

   FIG. 13 is a diagram for describing specific processing performed by a determiner in a laser processing apparatus according to an embodiment.
**[****FIG. 14****]**
   FIG. 14 is a diagram for describing other specific processing performed by a determiner in a laser processing apparatus according to an embodiment.

### Description of Embodiment

### (Circumstances leading to techniques of the Present Disclosure)

Before the specific description of an embodiment of the present disclosure, circumstances leading to the techniques of the present disclosure will be described.

A known laser processing apparatus can measure, by the OCT technology, the depth of a keyhole formed in a processed surface of a workpiece during laser processing. In this case, as illustrated in FIG. 1, workpiece 2 is irradiated with measurement light ML along with processing laser light (not illustrated in the drawings) and thus, an optical interference signal is detected that corresponds to the optical path difference between reference light and reflected light that is measurement light ML reflected by the bottom surface of keyhole 2b formed in processed surface 2a of workpiece 2. Subsequently, as illustrated in FIG. 2, a fast Fourier transform (FFT) is performed on the optical interference signal and thus, the depth of keyhole 2b based on the reflected light of measurement light ML can be calculated. Furthermore, as illustrated in FIG. 3, it is possible to obtain data of the depth of keyhole 2b with respect to the distance (position) on processed surface 2a of workpiece 2 by calculating the depth of keyhole 2b in series. FIG. 4 illustrates an example of the actually obtained depth profile of keyhole 2b.

In this manner, with the conventional laser processing apparatus, the depth of keyhole 2b can be calculated from the reflected light of measurement light ML. However, with the conventional laser processing apparatus, it is uncertain whether keyhole 2b has been formed to an intended depth, meaning that it is uncertain whether the laser processing is being normally performed on workpiece 2. In other words, with the conventional laser processing apparatus, even when a defect occurs during the laser processing, it is not possible to identify the type of a laser processing defect, leading to a failure to determine a defect mode in the laser processing.

For example, as illustrated in FIG. 5, there are a plurality of defect modes in laser processing that are a gap defect mode, a penetration defect mode, and a different material penetration defect mode, but the conventional laser processing apparatus cannot distinguish between these defect modes.

As illustrated in (a) in FIG. 5, the gap defect mode is a defect mode in which a gap is present between two workpieces 2 during the laser processing of two workpieces 2 stacked on top of each other. This is, for example, a situation where when a metal member (such as a metal plate) is used as workpiece 2, a gap is accidentally formed between two metal members during laser welding of the two metal members stacked on top of each other with processing laser light. In the gap defect mode, measurement light ML that has penetrated the metal member located at the top is reflected at separate points in the gap, resulting in a decrease in the amount of reflected light of measurement light ML.

As illustrated in FIG. 6, in the gap defect mode, a result is obtained in which the value of the depth of keyhole 2b is greater than that of the intended depth thereof by a value corresponding to the gap formed between two workpieces 2. For example, in the gap defect mode, the result illustrated in (a) in FIG. 7 is obtained. FIG. 7 shows in (a) that the depth of keyhole 2b has increased as compared to the result in FIG. 4 obtained at the normal time.

However, when a result is obtained in which the depth of keyhole 2b is greater than the intended depth, it is not certain whether the depth of keyhole 2b has increased due to the gap formed between two workpieces 2 or due to the increase in the output of the processing laser light. When the output of the processing laser light has increased, this is not a defect because it is ensured that there has been sufficient strength for processing (for example, welding) workpieces 2, whereas when a gap is formed between two workpieces 2, this is a defect. Therefore, when a result is obtained in which the depth of keyhole 2b is greater than the intended depth, there are instances where all the cases have to be regarded as defects, meaning that the likelihood of a threshold value has a narrow range.

As illustrated in (b) in FIG. 5, the penetration defect mode is a defect mode in which measurement light ML has penetrated workpiece 2. This is, for example, a case where when a metal member (such as a metal plate) is used as workpiece 2, although laser welding is supposed to be performed without causing penetration of the metal member, processing laser light and measurement light ML accidentally penetrate the metal member. Even when measurement light ML penetrates workpiece 2, part of measurement light ML is reflected by the inner surface of the through-hole of workpiece 2 or the lower surface of workpiece 2 and therefore, the depth of keyhole 2b is calculated from that reflected light. Note that in the penetration defect mode, the amount of the reflected light of measurement light ML is small.

In the penetration defect mode, a result is obtained in which the depth of keyhole 2b is substantially equal to the thickness of workpiece 2. Thus, the result obtained in the penetration defect mode shows that the depth of keyhole 2b is substantially equal to that measured at the normal time, as illustrated in FIG. 6. For example, in the penetration defect mode, the result illustrated in (b) in FIG. 7 is obtained. FIG. 7 shows in (b) that the result is obtained in which the depth is substantially equal to that in the result in FIG. 4 obtained at the normal time.

However, when a result is obtained in which the depth of keyhole 2b is substantially equal to the thickness of workpiece 2, it is not certain whether the depth of keyhole 2b has equalized with the thickness of workpiece 2 due to measurement light ML having penetrated workpiece 2 or due to workpiece 2 having been processed just to the extent corresponding to the thickness thereof. When workpiece 2 has been processed just to the extent corresponding to the thickness thereof, this is not a defect, whereas when measurement light ML has penetrated workpiece 2, this is a defect. Therefore, when a result is obtained in which the depth of keyhole 2b is not different from the thickness of workpiece 2, there are instances where all the cases have to be regarded as defects, meaning that the likelihood of a threshold value has a narrow range.

As illustrated in (c) in FIG. 5, the different material penetration defect mode is a defect mode in which when workpiece 2 includes two different materials, measurement light ML has penetrated one of the two different materials to the other. This is, for example, a case where when metal members (such as metal plates) made from different metal materials are used as workpiece 2, the two metal members are to be laser welded by scanning processing laser light, and the region to be processed includes: a portion in which only one of the two metal members is to be laser welded (a same material portion); and a portion in which both the two metal members are to be laser welded (a different material portion), the processing laser light has penetrated one of the two metal members to the other. In the different material penetration defect mode, when two different materials have different properties to absorb measurement light ML, the amount of reflected light of measurement light ML changes. For example, when among the two different materials, the material located at the bottom has reflectivity greater than the reflectivity of the material located at the top in the different material portion, the amount of reflected light of measurement light ML increases in the different material portion.

As illustrated in FIG. 6, in the different material penetration defect mode, a result is obtained in which the depth of keyhole 2b is the same as or similar to that measured at the normal time. In other words, the calculated values of the depth in the same material portion and the different material portion are not different, meaning that the depth in the same material portion and the depth in the different material portion are the same. For example, in the different material penetration defect mode, the result illustrated in (c) in FIG. 7 is obtained. As illustrated in (c) in FIG. 7, the boundary between the same material portion and the different material portion is not clear, and the depth in the same material portion and the depth in the different material portion are the same.

However, when a result is obtained in which the depth in the same material portion and the depth in the different material portion are the same, it is not certain whether measurement light ML has penetrated one of the two different materials to the other in the different material portion. In this case, this is not a defect in the same material portion, whereas when measurement light ML has penetrated one of the two different materials to the other in the different material portion, this is a defect. Thus, when the region in workpiece 2 to be processed includes the same material portion and the different material portion, it is conventionally uncertain whether measurement light ML has penetrated one of the two different materials to the other in the different material portion, meaning that the likelihood of a threshold value has a narrow range.

As described thus far, with the conventional laser processing apparatus, even when a defect occurs during the laser processing, it is not possible to identify the type of a laser processing defect, leading to a failure to determine a defect mode in the laser processing.

Through diligent research on this problem, the inventors of the present application have conceived of a technique that enables determination of a defect mode in laser processing by using the intensity of reflected light of measurement light ML.

Hereinafter, an embodiment of the present disclosure will be described with reference to the drawings. Note that each embodiment described below shows a specific example of the present disclosure. Thus, the numerical values, structural elements, the arrangement and connection of the structural elements, steps, the processing order of the steps etc., shown in the following embodiment are mere examples, and are not intended to limit the present disclosure. Accordingly, among the structural elements in the following embodiment, structural elements not recited in any one of the independent claims will be described as optional structural elements.

Note that the figures are schematic diagrams and are not necessarily precise illustrations. In the respective figures, substantially identical elements are assigned the same reference signs, and overlapping description is omitted or simplified. In the present specification, the terms "up/upward/above/top" and "down/downward/below/bottom" do not necessarily indicate an upward direction (vertically upward) and a downward direction (vertically downward) in a sense of absolute space.

In the present specification and the drawings, the X-axis, the Y-axis, and the Z-axis represent the three axes of a three-dimensional Cartesian coordinate system. The X-axis and the Y-axis are axes that are perpendicular to each other and are both perpendicular to the Z-axis. In the present embodiment, the Z-axis direction is a vertical direction.

### Embodiment

First, the configuration of laser processing apparatus 1 according to an embodiment will be described with reference to FIG. 8. FIG. 8 is a diagram illustrating the configuration of laser processing apparatus 1 according to the embodiment.

Laser processing apparatus 1 is an apparatus that irradiates workpiece 2 (a workpiece to be processed) with processing laser light PL and thus performs laser processing on workpiece 2. The laser processing is laser welding, for example. In this case, laser processing apparatus 1 is a laser welder and, for example, when a metal member such as a metal plate is used as workpiece 2, irradiates the metal member that is workpiece 2 with processing laser light PL, and thus laser welds the metal member.

Furthermore, laser processing apparatus 1 is capable of not only performing laser processing on workpiece 2, but also measuring, by the OCT technology, the depth of keyhole 2b formed in processed surface 2a of workpiece 2 during the laser processing. Specifically, laser processing apparatus 1 irradiates keyhole 2b with measurement light ML and measures the depth of keyhole 2b by reflected light that is measurement light ML reflected by keyhole 2b.

Furthermore, laser processing apparatus 1 also includes the function of, when performing laser processing on workpiece 2 by irradiating workpiece 2 with processing laser light PL, determining a defect mode of said laser processing. Therefore, laser processing apparatus 1 illustrated in FIG. 8 may be configured as a defect mode determination system.

As illustrated in FIG. 8, laser processing apparatus 1 includes: processing head 10 that irradiates workpiece 2 with processing laser light PL; first laser light source 21 that emits processing laser light PL; second laser light source 22 that emits measurement light ML; optical interferometer 30; detector 40; processor 50; controller 60; first driver 71; and second driver 72.

Processing head 10 irradiates workpiece 2 with processing laser light PL emitted from first laser light source 21. Furthermore, processing head 10 irradiates workpiece 2 with measurement light ML emitted from second laser light source 22.

Processing head 10 includes first mirror 11, second mirror 12, dichroic mirror 13, collimating lens 14, and lens 15.

Each of first mirror 11 and second mirror 12 includes a reflector having a reflective surface on which regular reflection of incident light occurs. Each of first mirror 11 and second mirror 12 is a movable mirror capable of rotating about two or more axes. Each of first mirror 11 and second mirror 12 is a galvanometer mirror, for example.

First mirror 11 is connected to controller 60 via first driver 71. First driver 71 operates first mirror 11 based on an instruction from controller 60. Second mirror 12 is connected to controller 60 via second driver 72. Second driver 72 operates second mirror 12 based on an instruction from controller 60.

In the present embodiment, the two axes about which first mirror 11 and second mirror 12 rotate are the X-axis and the Y-axis. FIG. 8 illustrates only the rotation of each of first mirror 11 and second mirror 12 about the Y-axis as an axis of rotation. Note that each of first mirror 11 and second mirror 12 may be configured to be rotatable about two or more axes.

Dichroic mirror 13 has properties to transmit light within a first range of wavelengths and reflect light within a second range of wavelengths different from the first range of wavelengths. In the present embodiment, dichroic mirror 13 transmits processing laser light PL and reflects measurement light ML.

Collimating lens 14 condenses light incident thereon into collimated light. In the present embodiment, measurement light ML emitted from optical interferometer 30 enters collimating lens 14. Therefore, collimating lens 14 converts, into collimated light, measurement light ML emitted from optical interferometer 30. Collimating lens 14 is disposed on an optical path between optical interferometer 30 and second mirror 12. Therefore, measurement light ML that has been collimated by collimating lens 14 enters second mirror 12.

Lens 15 is a projection lens that projects processing laser light PL and measurement light ML onto workpiece 2. Lens 15 condenses light incident thereon and emits the condensed light. Therefore, lens 15 condenses processing laser light PL and measurement light ML and irradiates workpiece 2 with the condensed light. Specifically, lens 15 condenses processing laser light PL and measurement light ML to processing point 3 on workpiece 2. As an example, lens 15 is a fθ lens.

First laser light source 21 is a laser emitting device that emits processing laser light PL that is for performing laser processing on workpiece 2. In the present embodiment, first laser light source 21 is a laser oscillator that produces and emits laser light PL. As an example, first laser light source 21 oscillates laser light in a single mode.

Laser light PL emitted from first laser light source 21 is input to processing head 10 via first inlet 16. First inlet 16 is provided on processing head 10 at such a position as to allow processing laser light PL to be introduced into dichroic mirror 13.

Second laser light source 22 is a laser emitting device that emits measurement light ML that is for measuring workpiece 2. In the present embodiment, measurement light ML is laser light, and second laser light source 22 is a laser oscillator that produces and emits measurement light ML that is laser light. As an example, second laser light source 22 oscillates laser light in a single mode.

Measurement light ML emitted from second laser light source 22 is input to processing head 10 via optical interferometer 30 and second inlet 17. Second inlet 17 is provided on processing head 10 at such a position as to allow measurement light ML to be introduced into collimating lens 14.

In the present embodiment, processing laser light PL that is emitted from first laser light source 21 and measurement light ML that is emitted from second laser light source 22 are both infrared light. The peak wavelength of processing laser light PL and the peak wavelength of measurement light ML are different. As an example, the peak wavelength of processing laser light PL that is emitted from first laser light source 21 is 1064 nm, and the peak wavelength of measurement light ML that is emitted from second laser light source 22 is 1300 nm.

Note that the peak wavelength of each of processing laser light PL and measurement light ML is not limited to that described above. It is sufficient that the peak wavelength of processing laser light PL be the wavelength of light with which workpiece 2 can be processed, and it is sufficient that the peak wavelength of measurement light ML be the wavelength of light with which keyhole 2b formed in workpiece 2 can be measured. Furthermore, processing laser light PL and measurement light ML are not limited to infrared light.

Optical interferometer 30 generates an optical interference signal based on measurement light ML. In the present embodiment, using the optical coherence tomography (OCT), optical interferometer 30 generates an optical interference signal based on the optical path difference between reference light and reflected light that is measurement light ML reflected by workpiece 2. Specifically, optical interferometer 30 generates an optical interference signal by the swept-source optical coherence tomography (SS-OCT). Therefore, second laser light source 22 that emits measurement light ML is a wavelength swept light source and temporally sweeps wavelengths and emits measurement light ML.

Optical interferometer 30 incudes beam splitter 31 and reference mirror 32. Beam splitter 31 reflects part of measurement light ML emitted from second laser light source 22 and transmits other part of measurement light ML emitted from second laser light source 22. Measurement light ML reflected by beam splitter 31 is reflected by reference mirror 32 and travels toward detector 40 as reference light. Meanwhile, measurement light ML transmitted by beam splitter 31 irradiates workpiece 2 via processing head 10 and is reflected by workpiece 2. The reflected light that is measurement light ML reflected by workpiece 2 returns to optical interferometer 30 via processing head 10, is reflected by beam splitter 31, and travels toward detector 40. As a result, an optical interference signal is generated based on the optical path difference between the reflected light that is measurement light ML reflected by workpiece 2 and the reference light that is measurement light ML not reflected by workpiece 2.

The optical interference signal generated by optical interferometer 30 is detected by detector 40. In other words, detector 40 detects the optical interference signal generated based on the optical path difference between the reflected light of measurement light ML and the reference light of measurement light ML. Detector 40 is, for example, a photodetector such as a photodiode.

Processor 50 processes the optical interference signal detected by detector 40. Processor 50 includes measurement unit 51, image generator 52, and determiner 53.

Measurement unit 51 measures the depth of keyhole 2b formed in workpiece 2 during the laser processing on the basis of the optical interference signal detected by detector 40. Specifically, as illustrated in FIG. 9, measurement unit 51 calculates the depth of keyhole 2b by performing a fast Fourier transform (FFT) on the optical interference signals detected by detector 40. For example, the horizontal axis of the waveform of signals illustrated in FIG. 9 corresponds to the depth of keyhole 2b.

In the present embodiment, measurement light ML is temporally swept and emitted. Therefore, measurement unit 51 performs the fast Fourier transform on the optical interference signals generated by temporally swept and emitted measurement light ML and thus obtains point cloud data of a plurality of depths of keyholes 2b with respect to the distance (position) on processed surface 2a of workpiece 2, as illustrated in FIG. 10.

FIG. 10 illustrates an example of the depth profile of keyhole 2b obtained as just described. As illustrated in FIG. 10, the depth profile of keyhole 2b is image data, and the depths of keyholes 2b calculated from the optical interference signals generated by the reflected light of temporally swept and emitted measurement light ML are plotted as a group of numerous points. In other words, the plurality of depths of keyholes 2b are obtained as a two-dimensional information image in which said depths are plotted on a two-dimensional Cartesian coordinate system with the first axis representing the depth of keyhole 2b and the second axis representing the distance (position) on processed surface 2a. The two-dimensional information image illustrated in FIG. 10 is generated from the optical interference signals detected by detector 40. Note that this two-dimensional information image may be generated by measurement unit 51, may be generated by image generator 52, or may be generated by another image generator included in processor 50.

Image generator 52 generates a three-dimensional information image based on the reflected light that is measurement light ML reflected by workpiece 2. Specifically, image generator 52 generates a three-dimensional information image based on the above-described two-dimensional information image obtained by measurement unit 51. This means that the three-dimensional information image is generated from the optical interference signals used in the calculation of the two-dimensional information image.

FIG. 11 illustrates an example of the three-dimensional information image generated by image generator 52. As illustrated in FIG. 11, the three-dimensional information image is an image showing a distribution of the depth of keyhole 2b formed in workpiece 2 irradiated with processing laser light PL, the intensity of the reflected light that is measurement light ML reflected by workpiece 2, and the frequency of occurrence of the depth of keyhole 2b with respect to the intensity of the reflected light of measurement light ML. In other words, the three-dimensional information image generated by image generator 52 is data showing a distribution of the depth of keyhole 2b, the intensity of the reflected light of measurement light ML, and the frequency of occurrence of the depth of keyhole 2b with respect to the intensity of the reflected light of measurement light ML in a three-dimensional Cartesian coordinate system obtained by adding the frequency of occurrence of the depth of keyhole 2b with respect to the intensity of the reflected light of measurement light ML as the third axis to the two-dimensional Cartesian coordinate system with the first axis representing the depth of keyhole 2b and the second axis representing the intensity of the reflected light of measurement light ML. This means that the depth of keyhole 2b and the intensity of the reflected light of measurement light ML are shown in a plane coordinate system, and the frequency of occurrence of the depth of keyhole 2b with respect to the intensity of the reflected light of measurement light ML is shown as information in the height direction of said plane coordinate system. Note that the frequency of occurrence of the depth of keyhole 2b with respect to the intensity of the reflected light of measurement light ML indicates the percentage of the depth of keyhole 2b that occurs with a certain intensity of the reflected light of measurement light ML.

In FIG. 11, the intensity of the reflected light of measurement light ML can be calculated from the signal waveform obtained by performing the fast Fourier transform on the optical interference signals detected by detector 40. Specifically, the vertical axis of the signal waveform illustrated in FIG. 9 corresponds to the intensity of the reflected light of measurement light ML.

Determiner 53 determines, from the three-dimensional information image generated by image generator 52, whether laser processing is being performed in a normal mode or whether laser processing is being performed in a defect mode. This means that determiner 53 determines, from the three-dimensional information image generated by image generator 52 , whether or not laser processing is being performed normally.

Furthermore, determiner 53 determines a defect mode of the laser processing from the three-dimensional information image generated by image generator 52. Specifically, determiner 53 identifies one defect mode among a plurality of defect modes on the basis of the three-dimensional information image generated by image generator 52. In the present embodiment, the plurality of defect modes include the gap defect mode, the penetration defect mode, and the different material penetration defect mode, as indicated in FIG. 5. Therefore, determiner 53 can determine, from the three-dimensional information image generated by image generator 52, which defect mode is active among the gap defect mode, the penetration defect mode, and the different material penetration defect mode during the laser processing.

In this case, as illustrated in FIG. 12, the three-dimensional information image in the normal mode, the three-dimensional information image in the gap defect mode, the three-dimensional information image in the penetration defect mode, and the three-dimensional information image in the different material penetration defect mode have different features.

FIG. 12 illustrates an example of the three-dimensional information images in the normal mode, the gap defect mode, the penetration defect mode, and the different material penetration defect mode. In FIG. 12, the normal mode, the gap defect mode, and the penetration defect mode are cases where laser welding has been performed using a metal plate made from aluminum as workpiece 2, and the different material penetration defect mode is a case where laser welding has been performed using a metal plate made from copper stacked beneath a metal plate made from aluminum.

FIG. 12 illustrates, in (a), the three-dimensional information image in the normal mode. This is specifically the three-dimensional information image generated when laser welding is performed normally. As illustrated in (a) in FIG. 12, in the three-dimensional information image in the normal mode, peaks of the frequency of occurrence of the depth of keyhole 2b appear in a single concentrated location. For example, in the three-dimensional information image in the normal mode, the frequency of occurrence of the depth of keyhole 2b has a single peak. Note that the three-dimensional information image in the normal mode in (a) in FIG. 12 is the same as the three-dimensional information image illustrated in FIG. 11 and is generated based on the two-dimensional information image illustrated in FIG. 10.

FIG. 12 illustrates, in (b), the three-dimensional information image in the gap defect mode. As can be seen by comparing (a) and (b) in FIG. 12, in the three-dimensional information image in the gap defect mode, the frequency of occurrence of the depth of keyhole 2b has two separate peaks compared to the three-dimensional information image in the normal mode. For example, in the three-dimensional information image in the gap defect mode, the frequency of occurrence of the depth of keyhole 2b appears with two separate peaks. Note that the three-dimensional information image in (b) in FIG. 12 is generated based on the two-dimensional information image illustrated in (a) in FIG. 7.

FIG. 12 illustrates, in (c), the three-dimensional information image in the penetration defect mode. As can be seen by comparing (a) and (c) in FIG. 12, in the three-dimensional information image in the penetration defect mode, the peak position of the frequency of occurrence of the depth of keyhole 2b has moved compared to the three-dimensional information image in the normal mode. Specifically, in (c) in FIG. 12, the peak position of the frequency of occurrence of the depth of keyhole 2b has moved down to the left compared to the three-dimensional information image in the normal mode. Note that the three-dimensional information image in (c) in FIG. 12 is generated based on the two-dimensional information image illustrated in (b) in FIG. 7.

FIG. 12 illustrates, in (d), the three-dimensional information image in the different material penetration defect mode. As can be seen by comparing (a) and (d) in FIG. 12, in the three-dimensional information image in the different material penetration defect mode, the peak of the frequency of occurrence of the depth of keyhole 2b appears in the form of a straight line extending to the side compared to the three-dimensional information image in the normal mode. Specifically, in (d) in FIG. 12, since copper has higher reflectively than aluminum, in a situation where processing laser light PL penetrates the metal plate made from aluminum and reaches the metal plate made from copper, the peak of the frequency of occurrence of the depth of keyhole 2b moves to the right and appears in the form of a straight line compared to the three-dimensional information image in the normal mode. Note that the three-dimensional information image in (d) in FIG. 12 is generated based on the two-dimensional information image illustrated in (c) in FIG. 7.

Thus, the three-dimensional information image in the normal mode and the three-dimensional information image in the defect mode have different features and therefore, determiner 53 can easily determine, by identifying the three-dimensional information image generated by image generator 52, whether or not the laser processing is being performed normally.

Furthermore, since the three-dimensional information images in the gap defect mode, the penetration defect mode, and the different material penetration defect mode have different features, determiner 53 can easily identify, by identifying the three-dimensional information image generated by image generator 52, whether the defect occurring during the laser processing is the gap defect mode, the penetration defect mode, or the different material penetration defect mode.

Controller 60 controls the turning ON and OFF of first laser light source 21. Specifically, controller 60 causes processing laser light PL to be emitted and suspended. This makes it possible to perform laser processing at an arbitrary position on processed surface 2a of workpiece 2 with an arbitrary pattern by processing laser light PL. Furthermore, controller 60 controls the turning ON and OFF of second laser light source 22. Specifically, controller 60 causes measurement light ML to be emitted and suspended. As an example, the turning ON and OFF of first laser light source 21 and the turning ON and OFF of second laser light source 22 are the same. In this case, when workpiece 2 is irradiated with processing laser light PL, workpiece 2 is irradiated with measurement light ML as well.

Next, the operation of laser processing apparatus 1 will be described with reference to FIG. 8.

As illustrated in FIG. 8, processing laser light PL emitted from first laser light source 21 is input to processing head 10. Processing laser light PL is transmitted by dichroic mirror 13 and then reflected by first mirror 11 in processing head 10. Processing laser light PL reflected by first mirror 11 is transmitted by lens 15 and then condensed on processed surface 2a which is a surface of workpiece 2. Thus, laser processing is performed on processing point 3 on workpiece 2 by processing laser light PL. At this time, processing point 3 irradiated with processing laser light PL is melted and as a result, molten pool 3a is formed in workpiece 2. Furthermore, molten metal evaporates from molten pool 3a, and keyhole 2b is formed in workpiece 2 by the pressure of a vapor generated during the evaporation.

In the present embodiment, first mirror 11 is a galvanometer mirror, lens 15 is a fθ lens, and thus first mirror 11 and lens 15 constitute an optical scanning system. Therefore, by rotating first mirror 11 through a predetermined angle from the position of the origin, it is possible to control the arrival position of processing laser light PL on processed surface 2a. Thus, processing laser light PL can be scanned and emitted to the position of arbitrary processing point 3 on processed surface 2a. Note that the amount of operation of first mirror 11 for emitting processing laser light PL to desired processing point 3 (that is, an angle through which first mirror 11 is rotated from the position of the origin) can be uniquely set once the positional relationship of optical members included in processing head 10 and the distance from lens 15 to processed surface 2a are determined. Thus, it is possible to emit processing laser light PL to desired processing point 3.

At this time, the distance from lens 15 to processed surface 2a may be set so that the position of a focal point at which processing laser light PL is condensed to the greatest extent and processed surface 2a match each other. As a result, it is possible to most efficiently process workpiece 2 by processing laser light PL. Note that the distance from lens 15 to processed surface 2a is not limited to said distance and may be set to any appropriate distance according to processing application.

On the other hand, measurement light ML (laser light for measurement) emitted from second laser light source 22 is input to optical interferometer 30. In optical interferometer 30, part of measurement light ML is reflected by beam splitter 31 to serve as reference light, and other part of measurement light ML is transmitted by beam splitter 31 and then input to processing head 10. Measurement light ML input to processing head 10 is converted by collimating lens 14 into collimated light, reflected by second mirror 12, further reflected by dichroic mirror 13, then reflected by first mirror 11, transmitted by lens 15, and emitted to workpiece 2. In this case, measurement light ML is condensed by lens 15 to processing point 3 on processed surface 2a of workpiece 2.

Subsequently, measurement light ML emitted to workpiece 2 is reflected by workpiece 2, travels back through the propagation path for measurement light ML, and reaches optical interferometer 30. Specifically, measurement light ML emitted to workpiece 2 is reflected by the bottom surface of keyhole 2b formed in workpiece 2, and in processing head 10, is transmitted by lens 15, reflected by first mirror 11, reflected by dichroic mirror 13, then reflected by second mirror 12, transmitted by collimating lens 14, and input to optical interferometer 30. In this manner, the reflected light that is measurement light ML reflected by workpiece 2 is input to optical interferometer 30.

The reflected light of measurement light ML input to optical interferometer 30 is reflected by beam splitter 31 in optical interferometer 30 and travels toward detector 40. Thus, an optical interference signal is generated based on the optical path difference between the reflected light that is measurement light ML reflected by workpiece 2 and the reference light that is measurement light ML reflected by reference mirror 32. This optical interference signal is detected by detector 40.

The optical interference signal detected by detector 40 is input to processor 50. Measurement unit 51 in processor 50 measures the depth of keyhole 2b (that is, the penetration depth at processing point 3) on the basis of the optical interference signal detected by detector 40. Note that the penetration depth indicates the distance between the deepest point of the melted portion of workpiece 2 and processed surface 2a.

Furthermore, in laser processing apparatus 1 according to the present embodiment, determiner 53 in processor 50 determines a defect mode of the laser processing. Specifically, determiner 53 determines a defect mode of the laser processing from the three-dimensional information image generated based on the reflected light that is measurement light ML reflected by workpiece 2.

In this manner, a defect mode of the laser processing can be determined. Specifically, determiner 53 determines, from the three-dimensional information image generated by image generator 52, which defect mode is active among the gap defect mode, the penetration defect mode, and the different material penetration defect mode during the laser processing.

In this case, determiner 53 can determine a defect mode by using a machine learning model, for example. Specifically, as illustrated in FIG. 13, determiner 53 includes a machine learning model generated in advance by machine learning and when the three-dimensional information image generated from the reflected light of measurement light ML during laser processing is input to said machine learning model, can determine a defect mode of the laser processing.

The machine learning model used in determiner 53 is a machine learning model generated in advance by machine learning based on training data obtained by adding an annotation indicating a defect mode to each of the plurality of three-dimensional information images obtained in advance. The machine learning model is stored in a storage medium such as memory mounted in laser processing apparatus 1, for example.

Furthermore, as illustrated in FIG. 13, determiner 53 may not only output the type of a defect mode, but also calculate numerical value information related to said defect mode. For example, when the identified defect mode is the gap defect mode, determiner 53 may output the width of the gap between two workpieces 2 as the numerical value information. When the identified defect mode is the penetration defect mode, determiner 53 may calculate, as the numerical value information, a penetration degree indicating an extent to which measurement light ML has penetrated workpiece 2. When the identified defect mode is the different material penetration defect mode, determiner 53 may calculate, as the numerical value information, a different material penetration degree indicating an extent to which measurement light ML has penetrated two different materials.

### Variations

The techniques of the present disclosure have been described thus far based on the embodiment, but the present disclosure is not limited to the above-described embodiment.

For example, in the above-described embodiment, when determining a defect mode by using a three-dimensional information image, a defect mode is determined by using a machine learning model, but this is not limiting. Specifically, determiner 53 may extract a feature amount from a three-dimensional information image to determine a defect mode. In this case, determiner 53 includes a feature amount extractor that extracts a feature amount from the three-dimensional information image generated by image generator 52, as illustrated in FIG. 14. Note that in this case, similar to that described above, determiner 53 may not only output the type of a defect mode, but also calculate numerical value information related to said defect mode.

Furthermore, in the above-described embodiment, the two-dimensional information image illustrated in FIG. 10 is generated first based on the optical interference signals obtained from the measurement light reflected by workpiece 2, and image generator 52 generates a three-dimensional information image from said two-dimensional information image, but this is not limiting. For example, image generator 52 may directly generate a three-dimensional information image from the optical interference signals obtained from the measurement light reflected by workpiece 2. In other words, it is sufficient that the three-dimensional information image be generated based on the reflected light that is the measurement light reflected by workpiece 2.

Furthermore, in the above-described embodiment, a defect mode is determined based on the three-dimensional information image generated by image generator 52, but this is not limiting. For example, a defect mode may be determined based on the peak of the frequency of occurrence of the depth of keyhole 2b and/or distribution information of said peak from the optical interference signals.

Furthermore, in the above-described embodiment, the processes described as the operations of the function units in laser processing apparatus 1, such as processor 50 and controller 60, can be performed by a computer. For example, the computer performs the aforementioned processes by executing a program using hardware resources such as a processor (central processing unit (CPU)), memory, and an input/output circuit. Specifically, the processor obtains data to be processed from the memory, the input/output circuit, or the like, calculates the data, outputs the calculation result to the memory, the input/output circuit, or the like and thus performs the processes. Note that the processor may be formed of one semiconductor chip or may be formed of more than one semiconductor chip physically. When the processor is formed of more than one semiconductor chip, controls in each embodiment may be realized using separate semiconductor chips. Processor 50 and controller 60 may be formed of circuits. These circuits may form one circuit as a whole or may be separate circuits. Furthermore, each of these circuits may be a versatile circuit or may be a dedicated circuit.

The techniques of the present disclosure can be realized as a laser processing method or a defect mode determination method. For example, the laser processing method according to the present disclosure is a laser processing method for determining a defect mode of laser processing when performing laser processing on workpiece 2 by irradiating workpiece 2 with processing laser light PL and includes: determining the defect mode of the laser processing from a three-dimensional information image generated based on reflected light that is measurement light ML reflected by workpiece 2. The defect mode determination method according to the present disclosure is a defect mode determination method for determining a defect mode of laser processing when performing laser processing on workpiece 2 by irradiating workpiece 2 with processing laser light PL and includes: determining the defect mode of the laser processing from a three-dimensional information image generated based on reflected light that is measurement light ML reflected by workpiece 2.

The laser processing method or the defect mode determination method in the above-described embodiment may be implemented as a computer program realized by a computer or may be implemented as a computer-readable recording medium having said program stored therein. For example, the present disclosure may be a program that causes a computer to perform the laser processing method or the defect mode determination method.

Note that forms obtained by various modifications to the above-described embodiment that can be conceived by a person having ordinary skill in the art as well as forms realized by arbitrarily combining structural elements and functions in the embodiment which are within the scope of the essence of the present disclosure are included in the present disclosure. Furthermore, among the plurality of claims recited in the claims of the present application as filed, two or more claims arbitrarily combined in a manner that no technical contradiction occurs are also included in the present disclosure. For example, if a dependent claim recited in the claims of the present application as filed is rewritten as a multiple dependent claim or a multi-multi dependent claim so as to refer to all the preceding claims in a manner that no technical contradiction occurs, a combination of all the claims included in the multiple dependent claim or the multi-multi dependent claim is also included in the present disclosure.

### Industrial Applicability

The techniques of the present disclosure are useful as a laser processing apparatus or the like that performs laser processing such as laser welding.

### Reference Signs List

- 1: laser processing apparatus
- 2: workpiece
- 2a: processed surface
- 2b: keyhole
- 3: processing point
- 3a: molten pool
- 10: processing head
- 11: first mirror
- 12: second mirror
- 13: dichroic mirror
- 14: collimating lens
- 15: lens
- 16: first inlet
- 17: second inlet
- 21: first laser light source
- 22: second laser light source
- 30: optical interferometer
- 31: beam splitter
- 32: reference mirror
- 40: detector
- 50: processor
- 51: measurement unit
- 52: image generator
- 53: determiner
- 60: controller
- 71: first driver
- 72: second driver
- PL: processing laser light
- ML: measurement light

## Claims

1. A laser processing apparatus that performs laser processing on a workpiece by irradiating the workpiece with processing laser light, the laser processing apparatus comprising:
a laser light source that emits the processing laser light; and
a determiner that determines a defect mode of the laser processing from a three-dimensional information image generated based on reflected light that is measurement light reflected by the workpiece, wherein
the three-dimensional information image is an image showing a distribution of a depth of a keyhole formed in the workpiece when irradiated with the processing laser light, an intensity of the reflected light, and a frequency of occurrence of the depth of the keyhole with respect to the intensity of the reflected light.

2. The laser processing apparatus according to claim 1, comprising:
an optical interferometer that generates an optical interference signal based on an optical path difference between the reflected light and reference light, wherein
the three-dimensional information image is generated from the optical interference signal.

3. The laser processing apparatus according to claim 2, wherein
the optical interferometer generates the optical interference signal by swept-source optical coherence tomography.

4. The laser processing apparatus according to any one of claims 1 to 3, wherein
when the three-dimensional information image generated from the reflected light during the laser processing is input to a machine learning model generated in advance by machine learning based on training data obtained by adding an annotation indicating the defect mode to each of a plurality of three-dimensional information images obtained in advance, the determiner determines the defect mode of the laser processing, the plurality of three-dimensional information images each being the three-dimensional information image.

5. The laser processing apparatus according to any one of claims 1 to 3, wherein
the determiner identifies one defect mode among a plurality of defect modes each being the defect mode, and
the plurality of defect modes include: a gap defect mode in which when two workpieces each being the workpiece are stacked on top of each other and the laser processing is performed thereon, a gap is present between the two workpieces; a penetration defect mode in which the measurement light has penetrated the workpiece; and a different material penetration defect mode in which when the workpiece includes two different materials, the measurement light has penetrated one of the two different materials to an other of the two different materials.

6. The laser processing apparatus according to claim 5, wherein
the determiner:
outputs a width of the gap between the two workpieces when the defect mode identified is the gap defect mode;
calculates a penetration degree indicating an extent to which the measurement light has penetrated the workpiece when the defect mode identified is the penetration defect mode; and
calculates a different material penetration degree indicating an extent to which the measurement light has penetrated the two different materials when the defect mode identified is the different material penetration defect mode.

7. A defect mode determination system that determines, when performing laser processing on a workpiece by irradiating the workpiece with processing laser light, a defect mode of the laser processing, the defect mode determination system comprising:
a determiner that determines the defect mode of the laser processing from a three-dimensional information image generated based on reflected light that is measurement light reflected by the workpiece, wherein
the three-dimensional information image is an image showing a distribution of a depth of a keyhole formed in the workpiece when irradiated with the processing laser light, an intensity of the reflected light, and a frequency of occurrence of the depth of the keyhole with respect to the intensity of the reflected light.

8. A defect mode determination method for determining, when performing laser processing on a workpiece by irradiating the workpiece with processing laser light, a defect mode of the laser processing, the defect mode determination method comprising:
determining the defect mode of the laser processing from a three-dimensional information image generated based on reflected light that is measurement light reflected by the workpiece, wherein
the three-dimensional information image is an image showing a distribution of a depth of a keyhole formed in the workpiece when irradiated with the processing laser light, an intensity of the reflected light, and a frequency of occurrence of the depth of the keyhole with respect to the intensity of the reflected light.
